# EUROPEAN PATENT APPLICATION

(11) **EP 4 792 651 A1**
(43) Date of publication of application: **19.08.2026**
(21) Application number: 24877014.1
(22) Date of filing: 24.09.2024
(51) Int. Cl.: A23B 2/00, A23B 2/70, A23B 2/708, A23B 2/717, A23L 13/00

(54) **CELL-CULTURED FOOD IN PACKAGING CONTAINER, PRODUCTION METHOD FOR CELL-CULTURED FOOD IN PACKAGING CONTAINER, AND PRESERVATION METHOD FOR CELL-CULTURED FOOD IN PACKAGING CONTAINER**

(30) Priority: 12.10.2023 JP 2023176512
(71) Applicant: Toyo Seikan Group Holdings, Ltd., Shinagawa-ku Tokyo 141-8627 (JP)
(72) Inventor: YAMASAKI Takaaki, Yokohama-shi, Kanagawa 240-0062 (JP); TOTANI Takahiko, Yokohama-shi, Kanagawa 240-0062 (JP); KUNINORI Masahiro, Yokohama-shi, Kanagawa 240-0062 (JP)
(74) Representative: Hasegawa, Kan
(86) International application number: PCT/JP2024/033808
(87) International publication number: WO 2025/079415

(57) **Abstract**

Provided is a cell-cultured food in a packaging container, which enables suppression of deterioration of a cell-cultured food containing cultured cells. A cell-cultured food in a packaging container, the cell-cultured food containing cultured cells, wherein the cultured cells and a protease inhibitor are enclosed in a sealed packaging container. It is preferable that an inside of the packaging container should be in a low oxygen state. It is also preferable that the packaging container should be enclosed in another sealed packaging container, and that a space inside the other packaging container and outside the packaging container should be in a low oxygen state. Further, it is preferable that a deoxidizer should be enclosed in the space inside the other packaging container and outside the packaging container, and it is also preferable that a carbon dioxide generator should be enclosed in the space inside the other packaging container and outside the packaging container.

## Description

### Technical Field

The present invention relates to a cell-cultured food, and particularly to a technique for suppressing deterioration of a cell-cultured food.

### Background Art

In recent years, technical development relating to production of cell-cultured foods such as cultured meat has been advanced. Cell-cultured foods are expected to not only help solve problems such as food crisis and food loss, but also reduce the production volume of livestock and contribute to prevention of global warming.

On the other hand, a technique for enabling preservation of a cell-cultured food in a state where the quality thereof is maintained has not been sufficiently developed yet, and there is a general situation where it is recognized that the quality of a cell-cultured food can be maintained by maintaining the cell-cultured food in an aseptic state.

For example, it is considered that the quality of a cell-cultured food can be maintained without additional sterilization treatment, addition of a food additive, or cryopreservation by packaging the cell-cultured food in an aseptic environment to prevent quality deterioration caused by microorganisms.

### Citation List

### Patent Document

Patent Document 1: JP 2023-519478 T
Patent Document 2: JP 2022-513441 T
Patent Document 3: JP 2022-532498 T

### Non-Patent Literature

Non-Patent Literature 1: Cell Transplantation, Volume 29:1-7, 2020
Non-Patent Literature 2: Journal of Nutritional Science and Vitaminology 50, 45-49, 2004

### Summary of Invention

### Technical Problem

However, a problem relating to general food preservation is that when food is preserved in an atmospheric environment having an oxygen concentration of 21%, fats and oils, vitamins, pigments, aroma components, and the like in the food are oxidized, thereby impairing the taste of the food.

In addition, a problem relating to preservation of muscle cells in food is, for example, that if the food is preserved for as short as 2 hours in an environment where oxygen is present at a concentration of 1%, superoxide anions in the muscle cells are decomposed into oxygen and hydrogen peroxide by the action of superoxide dismutase derived from the muscle cells. It has been reported that the activity of proteases is promoted in the presence of hydrogen peroxide, leading to a reduction in the number of muscle cells (Non-Patent Literatures 1 and 2). Such degradation of proteins contained in the food results in an unintended texture or taste of the food, which is problematic.

Therefore, the present inventors have made intensive studies and succeeded in developing a cell-cultured food in a packaging container, which can solve the above problems and enables suppression of deterioration of a cell-cultured food, and have completed the present invention.

Specifically, the rate of decrease in viable cells in a cell-cultured food could be reduced by enclosing a protease inhibitor together with cultured cells in a sealed packaging container.

In addition, by bringing the inside of the packaging container into a low oxygen state, the rate of decrease in the number of viable cells in the cell-cultured food could be more greatly reduced.

Further, the present inventors have succeeded in further reducing the rate of decrease in the number of viable cells in the cell-cultured food by sealing the packaging container in another packaging container and bringing a space inside the other packaging container and outside the packaging container into a low oxygen state.

Here, Patent Document 1 describes that since steps of packaging and sealing a cultured tissue are performed under aseptic conditions, there is no need for additional sterilization treatment or preservative additives, and that a packaged cultured tissue (for example, meat) having a long quality retention period is produced (paragraph [0022]).

In addition, Patent Document 2 describes, regarding an edible food using cultured cells, that the shelf life of the edible food can be significantly extended because the edible food is grown in a completely aseptic environment, and also describes that there are no indigenous bacteria (bacteria, yeast, etc.) and that there is no need to freeze the edible food by aseptic packaging (paragraph [0227]).

Further, Patent Document 3 describes that, since the propagation process is aseptic, the resulting packaged food is aseptic and has a much longer storage life than known fresh products such as fresh meat, and that the resulting food is aseptic and thus can be shipped without the need for cooling (paragraph [0145]).

However, these patent documents neither describe nor suggest that the rate of decrease in viable cells in a cell-cultured food is reduced by enclosing a protease inhibitor together with cultured cells in a sealed packaging container.

Further, these patent documents neither describe nor suggest that the rate of decrease in cultured cells in the cell-cultured food is reduced by bringing the inside of the packaging container into a low oxygen state, or by sealing the packaging container in another packaging container and bringing a space inside the other packaging container and outside the packaging container into a low oxygen state.

The present invention has been made in view of the above circumstances, and an object thereof is to provide a cell-cultured food in a packaging container, a method for producing a cell-cultured food in a packaging container, and a method for preserving a cell-cultured food in a packaging container, which enable suppression of deterioration of a cell-cultured food containing cultured cells.

### Solution to Problem

In order to achieve the above object, the cell-cultured food in a packaging container of the present invention is a cell-cultured food in a packaging container, the cell-cultured food containing cultured cells, wherein the cultured cells and a protease inhibitor are enclosed in a sealed packaging container.

The cell-cultured food in a packaging container of the present invention is preferably configured such that the protease inhibitor is preferably at least one selected from the group consisting of leupeptin, E-64, aprotinin, pestatin, EDTA, AEBSF, and lactacystin.

The cell-cultured food in a packaging container of the present invention is preferably configured such that an inside of the packaging container is in a low oxygen state.

The cell-cultured food in a packaging container of the present invention is preferably configured such that the packaging container is enclosed in another sealed packaging container, and that a space inside the other packaging container and outside the packaging container is in a low oxygen state.

The cell-cultured food in a packaging container of the present invention is preferably configured such that a deoxidizer is enclosed in the space inside the other packaging container and outside the packaging container, and is also preferably configured such that a carbon dioxide generator should be enclosed in the space inside the other packaging container and outside the packaging container.

The cell-cultured food in a packaging container of the present invention is also preferably configured such that a liquid or gel prepared to have a low oxygen concentration is enclosed in the packaging container or in the space inside the other packaging container and outside the packaging container.

The cell-cultured food in a packaging container of the present invention is also preferably configured such that the packaging container has gas permeability and the other packaging container has gas barrier properties.

The cell-cultured food in a packaging container of the present invention is also preferably configured such that the packaging container is filled with a liquid or gel.

Further, the cell-cultured food in a packaging container of the present invention is preferably configured by variously combining the above-described cell-cultured foods in packaging containers.

The method for producing a cell-cultured food in a packaging container of the present invention is a method for producing a cell-cultured food in a packaging container, the cell-cultured food containing cultured cells, the method including sealing the cultured cells and a protease inhibitor in the packaging container.

The method for producing a cell-cultured food in a packaging container of the present invention preferably further includes bringing an inside of the packaging container into a low oxygen state.

The method for producing a cell-cultured food in a packaging container of the present invention preferably further includes enclosing the packaging container in another packaging container together with a deoxidizer and/or a carbon dioxide generator, and bringing a space inside the other packaging container and outside the packaging container into a low oxygen state.

The method for producing a cell-cultured food in a packaging container of the present invention preferably further includes enclosing the packaging container in another packaging container, and bringing a space inside the other packaging container and outside the packaging container into a low oxygen state through vacuum packaging.

The method for producing a cell-cultured food in a packaging container of the present invention preferably further includes enclosing a liquid or gel prepared to have a low oxygen concentration in the packaging container or in a space inside another packaging container in which the packaging container is enclosed and outside the packaging container.

The method for preserving a cell-cultured food in a packaging container of the present invention is a method for preserving a cell-cultured food in a packaging container, the cell-cultured food containing cultured cells, the method including sealing the cultured cells and a protease inhibitor in the packaging container.

The method for preserving a cell-cultured food in a packaging container of the present invention preferably further includes bringing an inside of the packaging container into a low oxygen state.

The method for preserving a cell-cultured food in a packaging container of the present invention preferably further includes enclosing the packaging container in another packaging container together with a deoxidizer and/or a carbon dioxide generator, and bringing a space inside the other packaging container and outside the packaging container into a low oxygen state.

### Advantageous Effects of Invention

According to the present invention, it is possible to provide a cell-cultured food in a packaging container, a method for producing a cell-cultured food in a packaging container, and a method for preserving a cell-cultured food in a packaging container, which enable suppression of deterioration of a cell-cultured food containing cultured cells.

### Brief Description of Drawings

FIG. 1 is a schematic view illustrating a configuration of a cell-cultured food in a packaging container according to a first embodiment of the present invention.
FIG. 2 is a schematic view illustrating a configuration of a cell-cultured food in a packaging container according to a second embodiment of the present invention.
FIG. 3 is a schematic view illustrating a configuration of an application example of the cell-cultured food in a packaging container according to the second embodiment of the present invention.
FIG. 4 is a diagram illustrating steps of a test for measuring a number of viable cells in Examples.
FIG. 5 is a diagram illustrating results of the test for measuring the number of viable cells in Examples.

### Description of Embodiments

Hereinafter, embodiments of the cell-cultured food in a packaging container, the method for producing a cell-cultured food in a packaging container, and the method for preserving a cell-cultured food in a packaging container of the present invention will be described in detail. However, the present invention is not limited to specific contents of the following embodiments and examples described below.

### First Embodiment

A cell-cultured food in a packaging container of the present embodiment is a cell-cultured food in a packaging container, the cell-cultured food containing cultured cells, characterized in that the cultured cells and a protease inhibitor are enclosed in a sealed packaging container.

In the present embodiment, the packaging container is not particularly limited, and a bag-shaped packaging container made of a soft packaging material can be suitably used. For example, a packaging container made of a film or sheet of a thermoplastic resin can be suitably used as the packaging container.

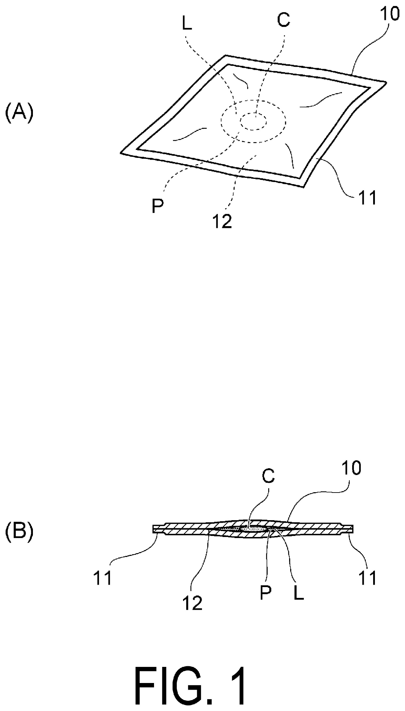

Specifically, as illustrated in FIG. 1, a packaging container 10 having a sealed housing section 12 inside, which is obtained by thermally welding peripheral edge portions 11 of two films, for example, can be used.

In the housing section 12, a protease inhibitor P is enclosed together with cultured cells C. In addition, in order to prevent the cultured cells C from drying, it is preferable to enclose a liquid or gel L in the housing section 12 together with the cultured cells C.

In the present embodiment, the shape of the packaging container 10 is not limited to a rectangular shape, and may be any shape such as a polygonal shape or a circular shape. The packaging container 10 may not be bag-shaped.

The cell-cultured food is a food containing cultured cells, and is also referred to as cellbased food. The cell-cultured food may include various foods containing cultured cells, such as fish meat, dairy products, confectioneries, and vegetables, which are composed of cultured cells, in addition to so-called cultured meat.

The type of the cultured cells C is not particularly limited, and, for example, one or more animal cells selected from muscle cells, stromal cells, fat cells, cartilage cells, liver cells, endothelial cells, kidney cells, epithelial cells, nerve cells, lymphatic cells, intestinal cells, cardiac muscle cells, and ciliated epithelial cells can be used.

In addition, as the cultured cells C, for example, one or more plant cells selected from cells of seeds, leaves, stems, roots, immature embryos, mature embryos, calluses, microspores, meristems, cotyledons, hypocotyls, epicotyls, mesocotyl, coleoptiles, root-derived tissues, plumules, and reproductive tissues can also be used.

In addition, cells of other organisms such as insects and microorganisms can also be used as the cultured cells C. Further, these cells can be used in combination.

As the protease inhibitor P, for example, leupeptin, E-64, aprotinin, pestatin, EDTA, AEBSF, or lactacystin can be suitably used. A plurality of protease inhibitors selected from these protease inhibitors may be used in combination.

The type of the liquid or gel L is not particularly limited, but, for example, a liquid such as saline or water, a gel such as a polysaccharide gel or a protein gel, or the like can be used.

In addition, in the cell-cultured food in a packaging container of the present embodiment, an inside of the packaging container 10 is preferably in a low oxygen state.

The sentence that "an inside of the packaging container 10 is in a low oxygen state" means a state in which the oxygen concentration in the packaging container 10 is lower than that in an atmospheric environment having an oxygen concentration of 21%.

Specifically, the oxygen concentration in the packaging container 10 is preferably 20% or less, more preferably 15% or less, even more preferably 12% or less, yet even more preferably 10% or less, yet even more preferably 5% or less, yet even more preferably 3% or less, yet even more preferably 2% or less, and particularly preferably 1% or less.

In the present embodiment, the method for bringing the inside of the packaging container 10 into a low oxygen state is not particularly limited. For example, the inside of the packaging container 10 can be suitably brought into a low oxygen state by forming the packaging container 10 through vacuum packaging.

In addition, by enclosing a liquid or gel prepared to have a low oxygen concentration in the packaging container 10, the inside of the packaging container 10 can also be suitably brought into a low oxygen state.

In the present embodiment, a material for the packaging container 10 preferably has gas barrier properties.

In particular, the material for the packaging container 10 preferably has an oxygen permeability at 23°C and 90% RH of 40 cc/m²·day·atm or less, more preferably 4.4 cc/m²·day·atm or less, even more preferably 0.4 cc/m²·day·atm or less, and particularly preferably 0.1 cc/m²·day·atm or less.

As the material for the packaging container 10, for example, a material having an inner layer made of polyethylene having heat sealability, an oxygen absorbing intermediate layer containing an oxygen absorbent, and an outer layer having barrier properties, or the like can be suitably used.

The method for producing a cell-cultured food in a packaging container of the present embodiment is a method for producing a cell-cultured food in a packaging container, the cell-cultured food containing cultured cells, the method being characterized by including: sealing the cultured cells and a protease inhibitor in the packaging container.

The method for preserving a cell-cultured food in a packaging container of the present embodiment is a method for preserving a cell-cultured food in a packaging container, the cell-cultured food containing cultured cells, the method being characterized by including: sealing the cultured cells and a protease inhibitor in the packaging container.

In the method for producing, and the method for preserving, a cell-cultured food in a packaging container, it is preferable to bring an inside of the packaging container into a low oxygen state.

In the method for producing, and the method for preserving, a cell-cultured food in a packaging container, the cell-cultured food in a packaging container is the same as that described above with reference to FIG. 1.

According to the present embodiment, the use of one packaging container makes it possible to obtain a cell-cultured food in a packaging container in which the degradation of proteins in cultured cells is suppressed, and to preserve the cell-cultured food in a packaging container in a state in which the degradation of the proteins in the cultured cells is suppressed.

In addition, the use of one packaging container makes it possible to obtain a cell-cultured food in a packaging container in which the inside of the packaging container is maintained in a low oxygen state, and to preserve the cell-cultured food in a packaging container in a state in which the inside of the packaging container is maintained in a low oxygen state.

Therefore, according to the present embodiment, with a relatively simple configuration, it is possible to solve the problem that a food has an unintended texture or taste due to the degradation of proteins, and the problem that the taste of a food is impaired when the food is preserved in an atmospheric environment, thereby making it possible to suppress the deterioration of the cell-cultured food.

### Second Embodiment

A cell-cultured food in a packaging container of the present embodiment is different from that of the first embodiment in that the packaging container is enclosed in another sealed packaging container, and the other configurations are the same as those of the first embodiment except for the points described below.

That is, the cell-cultured food in a packaging container of the present embodiment is a cell-cultured food in a packaging container, the cell-cultured food containing cultured cells, characterized in that: the cultured cells and a protease inhibitor are enclosed in a sealed packaging container; the packaging container is enclosed in another sealed packaging container; and a space inside the other packaging container and outside the packaging container is in a low oxygen state.

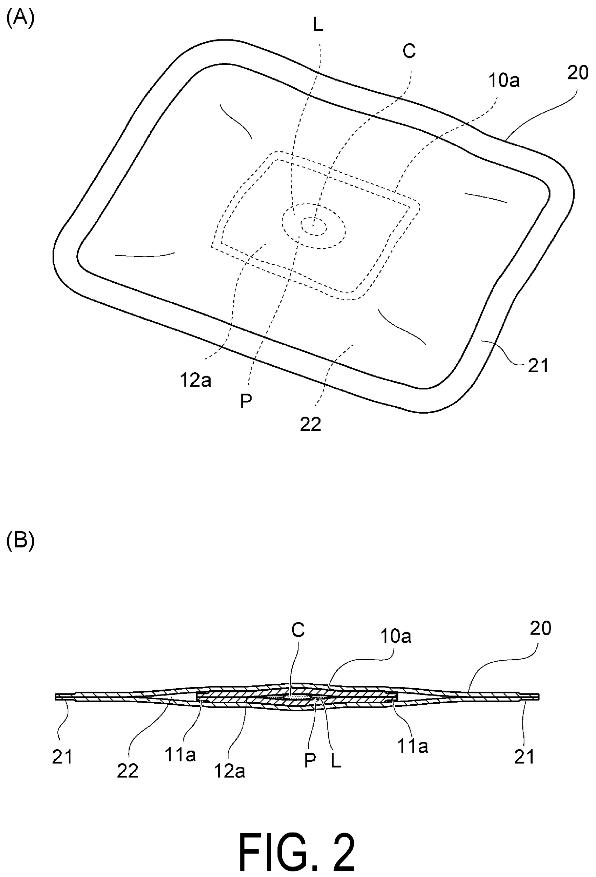

In particular, as illustrated in FIG. 2, an inner packaging container 10a is enclosed in an outer packaging container 20. As the inner packaging container 10a and the outer packaging container 20, bag-shaped packaging containers each made of a soft packaging material can be suitably used.

The inner packaging container 10a can be obtained by, for example, thermally welding peripheral edge portions 11a of two films, and has a sealed housing section 12a inside.

Similarly, the outer packaging container 20 can be obtained by thermally welding peripheral edge portions 21 of two films, and has a sealed housing section 22 inside.

In the present embodiment, the shapes of the inner packaging container 10a and the outer packaging container 20 are not limited to a rectangular shape, and may be any shape such as a polygonal shape or a circular shape.

A protease inhibitor P is enclosed in the housing section 12a of the inner packaging container 10a together with cultured cells C. In addition, in order to prevent the cultured cells C from drying and to use a liquid or gel L as a scaffold material for culture, it is preferable to enclose a liquid or gel L in the housing section 12a together with the cultured cells C.

Furthermore, in the cell-cultured food in a packaging container of the present embodiment, a space inside the outer packaging container 20 and outside the inner packaging container 10a (hereinafter, sometimes referred to as inter-container space) is brought into a low oxygen state.

Specifically, the oxygen concentration in the inter-container space is preferably 20% or less, more preferably 15% or less, even more preferably 12% or less, yet even more preferably 10% or less, yet even more preferably 5% or less, yet even more preferably 3% or less, yet even more preferably 2% or less, and particularly preferably 1% or less.

In the present embodiment, the method for bringing the inter-container space into a low oxygen state is not particularly limited. For example, the inter-container space can be suitably brought into a low oxygen state by forming the outer packaging container 20 through vacuum packaging.

In addition, by enclosing a liquid or gel prepared to have a low oxygen concentration in the inter-container space, the inter-container space can also be suitably brought into a low oxygen state.

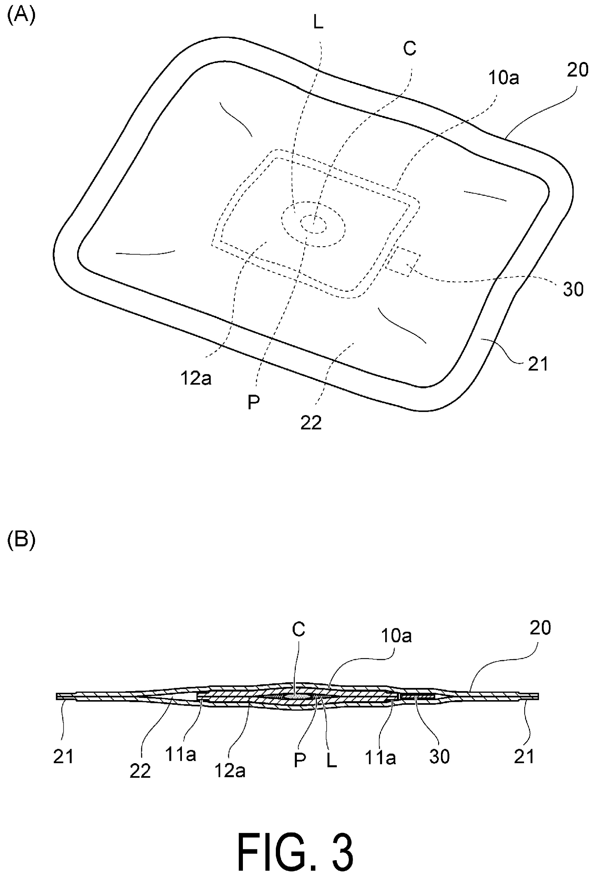

Further, as an application example of the present embodiment, as illustrated in FIG. 3, it is also preferable to bring the inter-container space into a low oxygen state by enclosing an oxygen reducing agent 30 in the inter-container space.

As the oxygen reducing agent 30, a deoxidizer or a carbon dioxide generator can be suitably used. In addition, these may be used in combination.

Specifically, as the deoxidizer, for example, Ageless (R) (Mitsubishi Gas Chemical Company, Inc.) can be suitably used. By using such a deoxidizer, oxygen in the inter-container space is absorbed by the deoxidizer, the oxygen concentration in the inter-container space can be maintained at 0.1% or less, and most of the remaining gas in the inter-container space can be nitrogen, which is an inert gas.

As the carbon dioxide generator, for example, Anaeropack (R) (Mitsubishi Gas Chemical Company, Inc.) can be suitably used. By using such a carbon dioxide generator, the carbon dioxide generator is filled in the inter-container space, the oxygen concentration in the inter-container space can be maintained at from 6 to 12%, the carbon dioxide concentration can be maintained at from 5 to 8%, and most of the remaining gas in the inter-container space can be nitrogen, which is an inert gas.

In the present embodiment, a material for the inner packaging container 10a preferably has gas permeability.

In particular, the material for the inner packaging container 10a preferably has an oxygen permeability at 23°C and 90% RH of 41 cc/m²·day·atm or more, more preferably 200 cc/m²·day·atm or more, even more preferably 1000 cc/m²·day·atm or more, and particularly preferably 5000 cc/m²·day·atm or more.

As the material for the inner packaging container 10a, for example, low-density polyethylene, polymethylpentene, silicone, or the like can be suitably used.

In the present embodiment, a material for the outer packaging container 20 preferably has gas barrier properties.

In particular, the material for the outer packaging container 20 preferably has an oxygen permeability at 23°C and 90% RH of 40 cc/m²·day·atm or less, more preferably 4.4 cc/m²·day·atm or less, even more preferably 0.4 cc/m²·day·atm or less, and particularly preferably 0.1 cc/m²·day·atm or less.

As the material for the outer packaging container 20, for example, a material having an inner layer made of polyethylene having heat sealability, an oxygen absorbing intermediate layer containing an oxygen absorbent, and an outer layer having barrier properties, or the like can be suitably used.

The method for producing a cell-cultured food in a packaging container of the present embodiment is a method for producing a cell-cultured food in a packaging container, the cell-cultured food containing cultured cells, the method including sealing the cultured cells and a protease inhibitor in the packaging container, and further including performing any of the following procedures.

That is, it is preferable that the packaging container should be enclosed in another packaging container, and that a space inside the other packaging container and outside the packaging container (inter-container space) should be brought into a low oxygen state through vacuum packaging.

It is also preferable to enclose a liquid or gel prepared to have a low oxygen concentration in the packaging container or in the inter-container space.

Further, it is also preferable to enclose the packaging container in another packaging container together with a deoxidizer and/or a carbon dioxide generator to bring the inter-container space into a low oxygen state.

The method for preserving a cell-cultured food in a packaging container of the present embodiment is a method for preserving a cell-cultured food in a packaging container, the cell-cultured food containing cultured cells, the method including sealing the cultured cells and a protease inhibitor in the packaging container, and further including performing any of the following procedures.

That is, it is preferable that the packaging container should be enclosed in another packaging container, and that a space inside the other packaging container and outside the packaging container (inter-container space) should be brought into a low oxygen state through vacuum packaging, as in the method for producing a cell-cultured food in a packaging container of the present embodiment.

It is also preferable to enclose a liquid or gel prepared to have a low oxygen concentration in the packaging container or in the inter-container space.

Further, it is also preferable to enclose the packaging container in another packaging container together with a deoxidizer and/or a carbon dioxide generator to bring the inter-container space into a low oxygen state.

In the method for preserving a cell-cultured food in a packaging container of the present embodiment, a preservation temperature is preferably about 5°C. A temperature suitable for cell preservation is generally about from -60 to -80°C. In addition, a temperature suitable for cell culture is generally about 37°C.

In the method for producing, and the method for preserving, a cell-cultured food in a packaging container, the cell-cultured food in a packaging container is the same as that described above with reference to FIG. 2 or 3.

According to the present embodiment, the degradation of proteins in the cultured cells can be suppressed, and the space inside the other packaging container and outside the packaging container can be maintained in a low oxygen state, whereby the inside of the packaging container can be maintained in a low oxygen state.

That is, the use of two packaging containers makes it possible to suppress the degradation of proteins in cultured cells and also to obtain a cell-cultured food in a packaging container in which the inside of the packaging container is maintained in a low oxygen state, and further makes it possible to preserve the cell-cultured food in a packaging container in a state in which the inside of the packaging container is maintained in a low oxygen state.

As described above, according to the present embodiment as well, with a relatively simple configuration, it is possible to solve the problem that a food has an unintended texture or taste due to the degradation of proteins, and the problem that the taste of a food is impaired when the food is preserved in an atmospheric environment, thereby making it possible to suppress the deterioration of the cell-cultured food.

### Examples

Hereinafter, tests performed to confirm the effects of the cell-cultured food in a packaging container, the method for producing a cell-cultured food in a packaging container, and the method for preserving a cell-cultured food in a packaging container of the present invention will be described.

First, two types of packaging containers, inner packaging containers and outer packaging containers, were provided. Then, three samples in which cultured cells, a culture solution, and a protease inhibitor were enclosed in an inner packaging container and three samples in which only the cultured cells and the culture solution were enclosed in an inner packaging container were prepared.

Two types in which an oxygen reducing agent was enclosed in an inter-container space inside the outer packaging container and outside the inner packaging container, and one type in which no oxygen reducing agent was enclosed were prepared. Then, the number of viable cells of the cultured cells in the inner packaging container after a lapse of a certain period of time was measured.

Specifically, as the inner packaging container, a bag made of linear low-density polyethylene (LLDPE) subjected to corona treatment was used. The inner packaging container has an oxygen permeability at 23°C and 90% RH of 8900 cc/m²·day·atm, and a size of 50 mm × 50 mm. The thickness of a film of the inner packaging container is 100 µm.

As the outer packaging container, a bag made of a film of 12 µ PET/15 µ nylon/70 µ CPP (cast polypropylene) was used. The 12 µ PET layer constitutes an outer surface of the outer packaging container. The outer packaging container has an oxygen permeability at 23°C and 90% RH of 0 cc/m²·day·atm, and a size of 110 mm × 160 mm. The thickness of the film of the outer packaging container is 97 µm.

As the cultured cells, mouse-derived muscle cells (C2C12, KAC Co., LTD.) were used.

As the culture solution, DMEM high glucose (FUJIFILM Wako Pure Chemical Corporation, model number: 043-30085) containing 10% FBS (Cosmo Bio Co., Ltd., model number: S-FBS-NL-025) was used.

As the protease inhibitor, a protease inhibitor cocktail powder (Sigma-Aldrich Japan, model number: P2714-1BTL) was used.

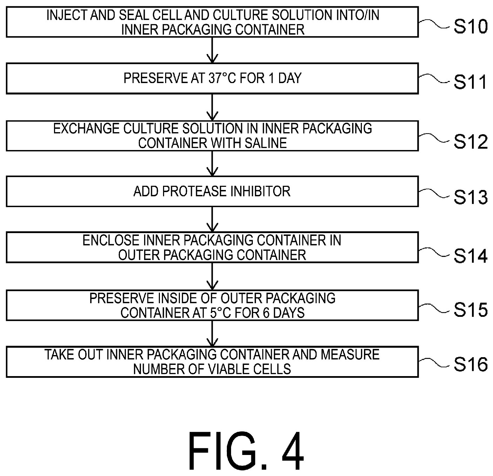

Then, a test was performed by the steps illustrated in FIG. 4 using a cell-cultured food in a packaging container of Comparative Example 1 in which no protease inhibitor was added and no oxygen reducing agent was enclosed, a cell-cultured food in a packaging container of Reference Example 1 in which no protease inhibitor was added and a carbon dioxide generator was enclosed as the oxygen reducing agent, a cell-cultured food in a packaging container of Reference Example 2 in which no protease inhibitor was added and a deoxidizer was enclosed as the oxygen reducing agent, a cell-cultured food in a packaging container of Example 1 in which a protease inhibitor was added and no oxygen reducing agent was enclosed, a cell-cultured food in a packaging container of Example 2 in which a protease inhibitor was added and a carbon dioxide generator was enclosed as the oxygen reducing agent, and a cell-cultured food in a packaging container of Example 3 in which a protease inhibitor was added and a deoxidizer was enclosed as the oxygen reducing agent.

First, a cell suspension containing differentiated cultured cells (mouse-derived muscle cells), the culture solution, and the protease inhibitor were injected into the inner packaging container, and the inner packaging container was sealed (step 10). An amount of the cultured cells seeded in the inner packaging container was 124 × 10⁴ cells/bag. A volume of the culture solution injected into the inner packaging container is 4 mL.

Then, preservation was performed at 37°C for 1 day (step 11). Thus, the cultured cells were adhered to an inner surface of the inner packaging container.

Next, the culture solution in the inner packaging container was discharged and replaced with 1.88 mL of Dulbecco's phosphate buffered saline (Nacalai Tesque, Inc., model number: 14249-95) and 0.1 mL of a 2% gelatin solution (Nippi, Incorporated, model number: 892303) (step 12).

Also, a protease inhibitor was injected into the inner packaging container (step 13). A volume of 100-fold diluted protease inhibitor (Sigma-Aldrich Japan, model number: P2714-1BTL) injected into the inner packaging container is 0.02 mL.

Then, the inner packaging container was enclosed in the outer packaging container (step 14). At this time, no oxygen reducing agent was enclosed in Comparative Example 1 and Example 1, Anaeropack (R) (Mitsubishi Gas Chemical Company, Inc.), which is a carbon dioxide generator, was enclosed as the oxygen reducing agent in Reference Example 1 and Example 2, and Ageless (R) (Mitsubishi Gas Chemical Company, Inc.), which is a deoxidizer, was enclosed as the oxygen reducing agent in Reference Example 2 and Example 3.

Preservation was performed at 5°C for 6 days (step 15) while maintaining the inside of the outer packaging container in a low oxygen state (Reference Example 1, Reference Example 2, Example 2, and Example 3) or without bringing the inside of the outer packaging container into a low oxygen state (Comparative Example 1 and Example 1). Thereafter, the inner packaging container was taken out from the outer packaging container, and the number of viable cells of the cultured cells in the inner packaging container was measured (step 16). The number of viable cells was measured as follows.

First, the Dulbecco's phosphate buffered saline was removed from the inner packaging container, and the inner packaging container was washed once with Dulbecco's phosphate buffered saline (Nacalai Tesque, Inc., model number: 14249-95). Next, the entire bag was immersed in 0.4 mL of Accutase (Nacalai Tesque, Inc., model number: 12679-54), and then the liquid was completely removed, followed by storage in a CO₂ incubator (SANYO Electric Co., Ltd., model number: MCO18AIC) at 37°C for 4 minutes.

Next, the cells were detached with 1 mL of DMEM high glucose (FUJIFILM Wako Pure Chemical Corporation, model number: 043-30085) containing 10% FBS (Cosmo Bio Co., Ltd., model number: S-FBS-NL-025), and the detached cells were collected in a 15-mL tube (available from Corning Incorporated, model number: 430791).

Further, 0.1 mL was sampled from the solution collected in the 15-mL tube, and applied to a 1.5-mL Eppendorf tube.

Then, using a cartridge for cell counting (Chemometec, model number: 941-0012), several tens of µL of cell solution was sampled. The cartridge was set in a cell counting apparatus (Chemometec, model number: NC-200), the number of cells was measured, and the number of viable cells in the inner packaging container was calculated.

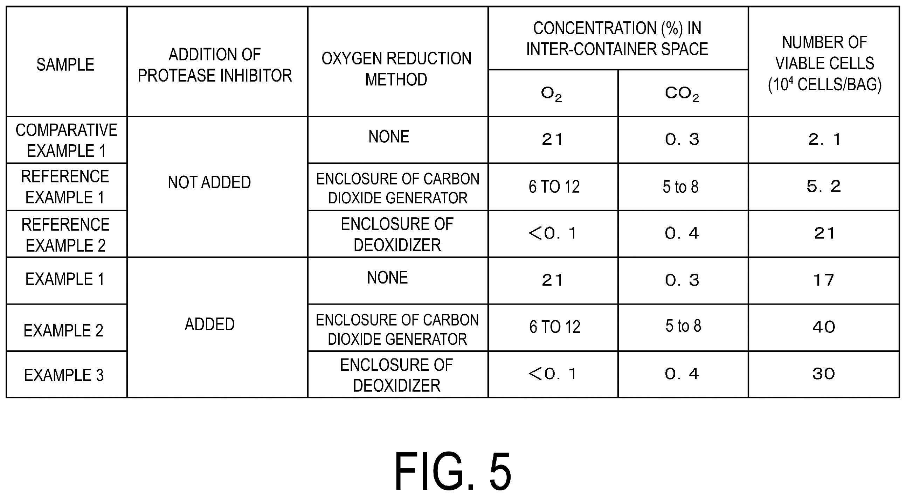

The measurement of the number of viable cells was performed three times for each of Comparative Example 1, Reference Example 2, Example 1, and Example 3, and twice for each of Reference Example 1 and Example 2, and an average for each was calculated. The results are illustrated in FIG. 5.

The concentrations of O₂ and CO₂ in the inter-container space in Examples 1 and 2 in FIG. 5 are not actual measurement values, but are based on the product data of the used oxygen reducing agent. The concentrations of O₂ and CO₂ in Comparative Example 1 are not actual measurement values, but are values in a general atmospheric environment.

As illustrated in FIG. 5, the number of viable cells in Comparative Example 1, in which no protease inhibitor was added into the packaging container and the inter-container space was not brought into a low oxygen state, was 2.1 (10⁴ cells/bag).

The number of viable cells in Reference Example 1, in which no protease inhibitor was added into the packaging container and the inter-container space was brought into a low oxygen state at an oxygen concentration of from 6 to 12%, was 5.2 (10⁴ cells/bag). The number of viable cells in Reference Example 2, in which no protease inhibitor was added into the packaging container and the inter-container space was brought into a low oxygen state at an oxygen concentration of from 0.1% or less, was 21 (10⁴ cells/bag).

Furthermore, the number of viable cells in Example 1, in which the protease inhibitor was added into the packaging container and the inter-container space was not brought into a low oxygen state, was 17 (10⁴ cells/bag). The number of viable cells in Example 2, in which the protease inhibitor was added into the packaging container and the inter-container space was brought into a low oxygen state at an oxygen concentration of from 6 to 12%, was 40 (10⁴ cells/bag). The number of viable cells in Example 3, in which the protease inhibitor was added into the packaging container and the inter-container space was brought into a low oxygen state at an oxygen concentration of from 0.1% or less, was 30 (10⁴ cells/bag).

As described above, when the cell-cultured food in the packaging container was preserved at 5°C for 6 days, the number of viable cells in Example 1, in which the protease inhibitor was added into the packaging container and the inter-container space was not brought into a low oxygen state, was about 8 times larger than that in Comparative Example 1, in which no protease inhibitor was added into the packaging container and the inter-container space was not brought into a low oxygen state.

From these results, it was found that, according to the cell-cultured food in a packaging container of the present embodiment, the addition of the protease inhibitor into the packaging container makes it possible to reduce the rate of decrease in viable cells in the cell-cultured food, and to suppress the deterioration of the cell-cultured food.

The number of viable cells in Example 2, in which the protease inhibitor was added into the packaging container and the inter-container space was brought into a low oxygen state at an oxygen concentration of from 6 to 12%, was about 19 times larger than that in Comparative Example 1, in which no protease inhibitor was added into the packaging container and the inter-container space was not brought into a low oxygen state.

Further, the number of viable cells in Example 3, in which the protease inhibitor was added into the packaging container and the inter-container space was brought into a low oxygen state at an oxygen concentration of from 0.1% or less, was about 14 times larger than that in Comparative Example 1, in which no protease inhibitor was added into the packaging container and the inter-container space was not brought into a low oxygen state.

From these results, it was found that, according to the cell-cultured food in a packaging container of the present embodiment, by adding the protease inhibitor into the packaging container and bringing the inter-container space into a low oxygen state, it is possible to more greatly reduce the rate of decrease in viable cells in the cell-cultured food, and to further suppress the deterioration of the cell-cultured food.

Here, the number of viable cells in Reference Example 1, in which no protease inhibitor was added into the packaging container and the inter-container space was brought into a low oxygen state at an oxygen concentration of from 6 to 12%, and the number of viable cells in Reference Example 2, in which no protease inhibitor was added into the packaging container and the inter-container space was brought into a low oxygen state at an oxygen concentration of from 0.1% or less, were about 2 times and 10 times, respectively, larger than that in Comparative Example 1, in which no protease inhibitor was added into the packaging container and the inter-container space was not brought into a low oxygen state.

On the other hand, the number of viable cells in Example 2, in which the protease inhibitor was added into the packaging container and the inter-container space was brought into a low oxygen state at an oxygen concentration of from 6 to 12%, was larger than the number of viable cells in Example 3, in which the protease inhibitor was added into the packaging container and the inter-container space was brought into a low oxygen state at an oxygen concentration of from 0.1% or less.

In Examples 2 and 3, the activity of the protease was inhibited by adding the protease inhibitor to the packaging container, and therefore, the degradation of proteins derived from the cultured cells was suppressed, and the decrease in the number of viable cells due to the protease could be prevented.

In general, when cells are preserved under the condition in which the CO₂ concentration in an atmosphere is about 5%, the increase in the number of cells is promoted. While the CO₂ concentration is about from 5 to 8% in the inter-container space of Example 3 to which the CO₂ generator Anaeropack (R) was added, the CO₂ concentration in the packaging container is also about the same, and it is considered that the inside of the packaging container of Example 3 was an optimal environment for the preservation of cells.

The present invention is not limited only to the embodiments and examples described above, and it goes without saying that various modifications can be made within the scope of the present invention. For example, it is possible to appropriately change the means for bringing the inter-container space into a low oxygen state, for example, to use a method other than the above ones.

### Industrial Applicability

The present invention can be suitably used in the case of preserving a cell-cultured food while suppressing the deterioration thereof.

The contents of the documents described in this description and the Japanese application of the present application are all incorporated herein.

### Reference Signs List

10: Packaging container
10a: Inner packaging container
11, 11a: Peripheral edge portion
12, 12a: Housing section
20: Outer packaging container
21: Peripheral edge portion
22: Housing section
30: Oxygen reducing agent (O₂ absorbent, CO₂ generator)
C: Cultured cell
L: Liquid or gel
P: Protease inhibitor

## Claims

1. A cell-cultured food in a packaging container, the cell-cultured food comprising cultured cells,
wherein the cultured cells and a protease inhibitor are enclosed in a sealed packaging container.

2. The cell-cultured food in a packaging container according to claim 1, wherein the protease inhibitor is at least one selected from the group consisting of leupeptin, E-64, aprotinin, pestatin, EDTA, AEBSF, and lactacystin.

3. The cell-cultured food in a packaging container according to claim 1 or 2, wherein an inside of the packaging container is in a low oxygen state.

4. The cell-cultured food in a packaging container according to claim 1 or 2, wherein the packaging container is enclosed in another sealed packaging container, and a space inside the other packaging container and outside the packaging container is in a low oxygen state.

5. The cell-cultured food in a packaging container according to claim 4, wherein a deoxidizer is enclosed in the space inside the other packaging container and outside the packaging container.

6. The cell-cultured food in a packaging container according to claim 4, wherein a carbon dioxide generator is enclosed in the space inside the other packaging container and outside the packaging container.

7. The cell-cultured food in a packaging container according to claim 4, wherein a liquid or gel prepared to have a low oxygen concentration is enclosed in the packaging container or in the space inside the other packaging container and outside the packaging container.

8. The cell-cultured food in a packaging container according to claim 4, wherein the packaging container has gas permeability and the other packaging container has gas barrier properties.

9. The cell-cultured food in a packaging container according to claim 1 or 2, wherein the packaging container is filled with a liquid or gel.

10. A method for producing a cell-cultured food in a packaging container, the cell-cultured food comprising cultured cells, the method comprising:
sealing the cultured cells and a protease inhibitor in the packaging container.

11. The method for producing a cell-cultured food in a packaging container according to claim 10, further comprising bringing an inside of the packaging container into a low oxygen state.

12. The method for producing a cell-cultured food in a packaging container according to claim 10, further comprising enclosing the packaging container in another packaging container together with a deoxidizer and/or a carbon dioxide generator, and bringing a space inside the other packaging container and outside the packaging container into a low oxygen state.

13. The method for producing a cell-cultured food in a packaging container according to claim 10, further comprising enclosing the packaging container in another packaging container, and bringing a space inside the other packaging container and outside the packaging container into a low oxygen state through vacuum packaging.

14. The method for producing a cell-cultured food in a packaging container according to claim 10, further comprising enclosing a liquid or gel prepared to have a low oxygen concentration in the packaging container or in a space inside another packaging container in which the packaging container is enclosed and outside the packaging container.

15. A method for preserving a cell-cultured food in a packaging container, the cell-cultured food comprising cultured cells, the method comprising:
sealing the cultured cells and a protease inhibitor in the packaging container.

16. The method for preserving a cell-cultured food in a packaging container according to claim 15, further comprising bringing an inside of the packaging container into a low oxygen state.

17. The method for preserving a cell-cultured food in a packaging container according to claim 15, further comprising enclosing the packaging container in another packaging container together with a deoxidizer and/or a carbon dioxide generator, and bringing a space inside the other packaging container and outside the packaging container into a low oxygen state.
